# EUROPÄISCHE PATENTSCHRIFT

(11) **EP 2 638 208 B1**
(45) Veröffentlichungstag und Bekanntmachung des Hinweises auf die Patenterteilung: **12.07.2017**
(21) Anmeldenummer: 11788035.1
(22) Anmeldetag: 04.11.2011
(51) Int. Cl.: E01B 25/10, B61B 13/04, B61B 13/02, B61B 3/02

(54) **ANORDNUNG MIT EINEM AUF EINEM SCHIENENTEIL BEWEGBAREN FAHRZEUG**
ARRANGEMENT COMPRISING A VEHICLE THAT CAN BE MOVED ON A RAIL PART
AGENCEMENT COMPRENANT UN VÉHICULE DÉPLAÇABLE SUR UNE PARTIE DU RAIL

(30) Priorität: 10.11.2010 DE 102010050760
(43) Veröffentlichungstag der Anmeldung: 18.09.2013
(73) Patentinhaber: Sew-Eurodrive GmbH & Co. KG, 76646 Bruchsal (DE)
(72) Erfinder: SCHMIDT, Josef, 76676 Graben-Neudorf (DE); BERGER, Ralf, 76297 Stutensee (DE); THOME, Markus, 76646 Bruchsal (DE)
(86) Internationale Anmeldenummer: PCT/EP2011/005566
(87) Internationale Veröffentlichungsnummer: WO 2012/062435

(56) Entgegenhaltungen:
- DE-A1- 4 345 105
- DE-A1-102004 049 982
- DE-A1-102006 049 588
- DE-C- 602 182
- FR-A1- 2 508 949
- FR-A2- 2 579 640

## Beschreibung

Die Erfindung betrifft eine Anordnung mit einem auf einem Schienenteil bewegbaren Fahrzeug.

Es ist bekannt, Schienen für Öffentliche Transporte, wie Eisenbahn, Straßenbahn oder dergleichen, aus Stahl zu fertigen.

Aus der DE 10 2006 049 588 A1 ist ein Transportsystem bekannt, das ein Stranggussschienenprofilteil aufweist.

Aus der DE 43 45 105 A1 ist eine Einschienenförderanlage bekannt.

Aus der FR 85 05103 ist ein modulares Profil für die translatorische Verschiebung von Transportwagen bekannt.

Aus der DE 602 182 ist eine hochverschleißfeste Schiene mit leicht auswechselbarem Kopf bekannt.

Aus der FR 2 508 949 A ist ein als Stranggussteil hergestelltes Schienenprofilteil bekannt.

Aus der DE 10 2004 049 982 A1 ist ein Verfahren zur Herstellung unterschiedlicher Varianten von Schienen bekannt.

Der Erfindung liegt daher die Aufgabe zugrunde, ein schienengebundene Transportanlage weiterzubilden, wobei eine möglichst kostengünstige Herstellung ermöglicht sein soll.

Erfindungsgemäß wird die Aufgabe bei der Anordnung nach den in Anspruch 1 angegebenen Merkmalen gelöst.

Von Vorteil ist dabei, dass je nach gewünschter Ausführungsvariante, also je nach Reaktivteil, Bohrungen in das Schienenprofilteil in einfacher Weise, schnell und hochpräzise einbringbar sind. Auf diese Weise ist dann bei der erfindungsgemäßen Baureihe eine hohe Varianz von Schienen mit einer geringen Teilezahl im Bausatz herstellbar.

Erfindungsgemäß ist das Schienenprofilteil als Stranggussteil gefertigt, insbesondere mit den Bohrhilfen,
insbesondere wobei das Schienenprofilteil aus Aluminium gefertigt ist. Von Vorteil ist dabei, dass kein zusätzlicher Aufwand zur Herstellung der Bohrkerben notwendig ist.

Erfindungsgemäß sind die Bohrhilfen als sich in Schienenrichtung erstreckende, zueinander parallel verlaufende Bohrkerben ausgeführt, insbesondere wobei Bohrkerben an der Oberseite und weitere Bohrkerben an einer Seitenfläche angeordnet sind, so dass ein Primärleiter durch eine in die Bohrkerbe eingebrachte Bohrung hindurchführbar ist. Von Vorteil ist dabei, dass an vorgebbarer Schienenposition eine Bohrung einbringbar ist in einfacher Weise und somit ein Kabel hindurchführbar ist von der dem Fahrzeug zugewandten Seitenfläche des Schienenprofilteils zu der vom Fahrzeug abgewandten Seite des Schienenprofilteils.

Erfindungsgemäß sind erste Bohrkerben in einer Nut angeordnet, insbesondere an deren Nutgrund. Von Vorteil ist dabei, dass die Nutwände zur Zentrierung und seitlichen Begrenzung verwendbar sind.

Erfindungsgemäß ist an einer der ersten Bohrkerben eine Bohrung eingebracht, an der ein erstes Reaktivteil schraubverbunden ist, wobei eine von dieser ersten Bohrkerbe beabstandete weitere erste Bohrkerbe ungenutzt am Schienenprofilteil angeordnet ist, insbesondere zur Nutzung bei einer Schraubverbindung mit einem vom ersten Reaktivteil unterschiedlichen Reaktivteil. Von Vorteil ist dabei, dass verschiedene Varianten erzeugbar sind mit wenig verschiedenen Teilen, also aus einem nur kleinen Bausatz von Teilen.

Bei einer vorteilhaften Ausgestaltung ist im Schienenprofilteil eine Ausnehmung zur Durchleitung eines Kühlmediums, wie Luft, Druckluft, Wasser, Öl oder Hydrauliköl, angeordnet ist. Von Vorteil ist dabei, dass das beispielsweise von Wirbelströmen erwärmte Schienenprofilteil kühlbar ist mit dem Kühlmedium. Die Ausnehmungen sind derart ausführbar, dass sie die Stabilität des Schienenprofilteils verbessern. Sie sind hierzu beispielsweise mit kreisrundem Querschnitt ausgeführt.

Bei einer vorteilhaften Ausgestaltung weist das Schienenprofilteil zumindest eine Lauffläche für ein Rad des Fahrzeugs auf. Von Vorteil ist dabei, dass mehrere Funktionalitäten mittels der Schiene ausführbar sind, wie Lauffläche für Rad und Führungsrad sowie Reaktivteil, Datenübertragung mittels Hohlleiter und Schlitzhohlleiter und/oder Durchleiten eines Kühlmediums durch einen Kühlkanal.

Bei einer vorteilhaften Ausgestaltung weist das Schienenprofilteil eine als Hohlleiter verwendete Ausnehmung und eine als Schlitzhohlleiter verwendete Ausnehmung auf, wobei
- eine Antenne zum Einkoppeln beziehungsweise Auskoppeln von elektromagnetischer Strahlung in den Hohlleiter,
- eine Antenne zum Einkoppeln beziehungsweise Auskoppeln von elektromagnetischer Strahlung in den Schlitzhohlleiter und
- das Fahrzeug eine Antenne zum Einkoppeln beziehungsweise Auskoppeln von elektromagnetischer Strahlung in den Schlitzhohlleiter
vorgesehen ist. Von Vorteil ist dabei, dass Daten vom Fahrzeug über den Schlitzhohlleiter zur nächstgelegenen Einspeisung übertragbar sind und dort die für andere Geräte, wie beispielsweise andere Einspeisungen oder einen zentralen Rechner, bestimmten Daten über den Hohlleiter weiterübertragbar.

Bei einer vorteilhaften Ausgestaltung unterscheidet sich die im Hohlleiter eingespeiste Frequenz der elektromagnetischen Wellen weniger als um den Faktor Zwei von der in den Schlitzhohlleiter eingespeisten Frequenz elektromagnetischer Wellen. Von Vorteil ist dabei, dass im Wesentlichen ein ähnlicher Frequenzbereich verwendbar ist und somit die Ausnehmungen im Schlitzhohlleiterprofil ähnlich groß sind. Auf diese Weise ist eine hohe Stabilität des Schienenprofilteils durch geeignete Anordnung der Ausnehmungen erreichbar.

Bei einer vorteilhaften Ausgestaltung ist die Nut in einer Lauffläche eingebracht. Von Vorteil ist dabei, dass das Fahrzeug beidseitig der Nut mittels Rädern auf der Lauffläche abstützbar ist.

Bei einer vorteilhaften Ausgestaltung sind weitere als Hohlleiter verwendbare Ausnehmungen im Schienenprofilteil angeordnet, wobei die Abmessungen derart klein sind, dass eine mindestens zweifach höhere Frequenz verwendet werden muss als bei dem Schlitzhohlleiter. Von Vorteil ist dabei, dass weitere Datenübertragungskanäle vorsehbar sind.

Bei einer vorteilhaften Ausgestaltung sind am Schienenprofilteil Aufnahmemittel ausgeprägt, an denen ein einen Primärleiter aufnehmendes Haltemittel, insbesondere Kunststoffprofilteil, befestigbar ist, in welchen ein mittelfrequenter Wechselstrom einprägbar ist, insbesondere mit einer Frequenz zwischen 10 und 500 kHz, so dass eine am Fahrzeug angeordnete Sekundärwicklung induktiv gekoppelt ist an den Primärleiter, welcher in Schienenrichtung langgestreckt verlegt ist, und der Sekundärwicklung eine Kapazität derart in Reihe oder parallel zugeschaltet ist, dass die zugehörige Resonanzfrequenz im Wesentlichen der Frequenz des in den Primärleiter eingespeisten Wechselstroms entspricht. Von Vorteil ist dabei, dass eine berührungslose Energieübertragung ans Fahrzeug ermöglicht ist. Allerdings werden dabei Wirbelströme in Metallischen Teilen erzeugt, die zu einer Erwärmung führen. Zur Kühlung sind Kühlkanäle im Schienenprofilteil vorgesehen, die ein Kühlmedium durchleiten.

Weitere Vorteile ergeben sich aus den Unteransprüchen.

Für die Herstellung der Anordnung ist vorteiligerweise ein Verfahren zur Herstellung unterschiedlicher Varianten von Schienen, insbesondere Einschienenbahn-Schienen oder Einschienenhängebahnschienen, aus einem Bausatz, anwendbar, wobei der Bausatz ein Schienenprofilteil und zwei verschiedene Reaktivteile aufweist,
wobei das Schienenprofilteil eine Schnittstelle aufweist, an der wahlweise eines der verschiedenen Reaktivteile verbindbar ist.

Von Vorteil ist dabei, dass eine zweistückige Ausführung vorgesehen ist. Somit ist je nach verwendetem elektromotorischen Antrieb des Fahrzeugs, also linearer Wirbelstrommotor, Asynchronmotor, Synchronmotor, Reluktanzmotor oder dergleichen, ein entsprechend wirksames Reaktivteil an der Schiene integriert befestigbar.

Bei einer vorteilhaften Ausgestaltung weist das Schienenprofilteil zur Bildung der Schnittstelle Bohrhilfen, insbesondere Bohrkerben, auf, insbesondere als Bohrhilfe beim Anfertigen von Bohrungen,
wobei zur Herstellung einer ersten Variante eine erste Bohrhilfe zum Verbinden des Reaktivteils verwendet wird, insbesondere zum Herstellen einer Bohrung für eine das Reaktivteil und das Schienenprofilteil verbindende Schraube,
wobei zur Herstellung einer anderen Variante eine andere Bohrhilfe zum Verbinden des Reaktivteils verwendet wird, insbesondere zum Herstellen einer Bohrung für eine das Reaktivteil und das Schienenprofilteil verbindende Schraube. Von Vorteil ist dabei, dass je nach gewähltem und somit herzustellenden Schienenteil eine entsprechend unterschiedlich angeordnete Bohrung in einfacher Weise ins Schienenprofilteil einbringbar ist. Somit sind Reaktivteile verbindbar, die mittels mittig oder außermittig angeordneten Verbindungsschrauben verbindbar sind und somit entsprechend unterschiedlichen Wirkungsmechanismen nach funktionieren. Insbesondere ist auch eine Zahnstange als Reaktivteil einsetzbar, so dass ein linearer Getriebemotor ausführbar ist, wobei ein von einem Elektromotor des Getriebemotors angetriebenes Verzahnungsteil des Getriebemotors mit der Zahnstange im Eingriff ist.

Bei einer vorteilhaften Ausgestaltung weist als Reaktivteil ein Schwert eines linearen Asynchronmotors oder eines Wirbelstrommotors verwendet ist oder ein Dauermagnete aufnehmendes Halteteil eines Synchronlinearmotors oder ein Reaktivteil eines Reluktanzmotors oder eine Zahnstange. Von Vorteil ist dabei, dass unterschiedliche Wirkweisen bei dem Linearantrieb des Fahrzeugs ausführbar sind. Insbesondere ist eine Umrüstung einer bestehenden Anordnung von einem Wirkprinzip auf ein anderes Wirkprinzip sehr einfach und schnell ausführbar.

Die Erfindung wird nun anhand von Abbildungen näher erläutert:
In der Figur 1 ist eine nicht von der Erfindung umfasste EHB-Schiene im Querschnitt gezeigt, wobei die Öffnung eines Schlitzhohlleiters 1 seitlich angebracht ist.
In der Figur 2 ist eine erfindungsgemäße EHB-Schiene im Querschnitt gezeigt, wobei die Öffnung eines Schlitzhohlleiters 1 unten angebracht ist.
In der Figur 3 ist die zur Figur 2 gehörige Schrägansicht gezeigt, wobei ein Schwert lösbar verbunden ist mit der Schiene.
In der Figur 4 ist die zur Figur 2 gehörige Schrägansicht gezeigt, wobei eine Zahnstange lösbar verbunden ist mit der Schiene.

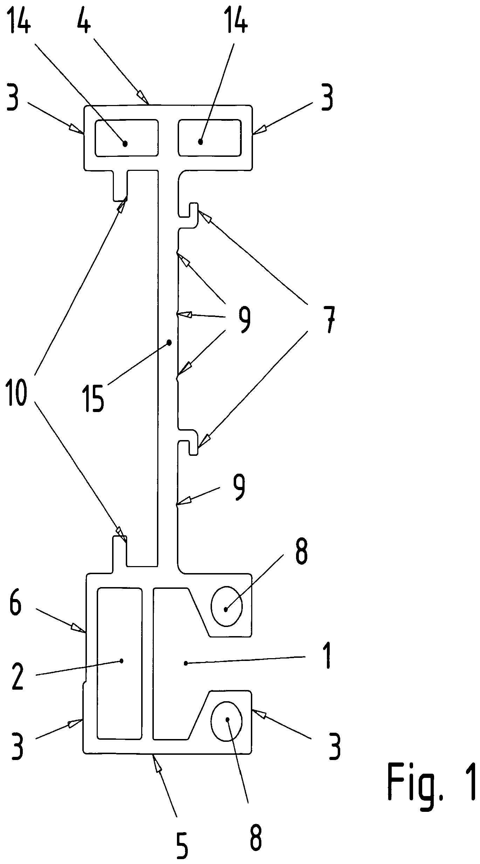

In der Figur 1 ist das Profil der in Strangguss gefertigten EHB-Schiene gezeigt. Dabei sind im Stranggussprofil Ausnehmungen vorgesehen, die in Stranggussrichtung sich durchgängig erstrecken.

Im oberen Teil der EHB-Schiene sind zwei separate Ausnehmungen 14 angeordnet, die als Hohlräume zur Durchleitung elektromagnetischer Wellen verwendbar sind. Die Ausnehmungen 14 sind also optional als Hohlleiter verwendbar.

An den Außenseiten, insbesondere an der Oberseite und den Seitenwänden der die Ausnehmungen 14 umgebenden Wandung, sind Laufflächen für Räder vorgesehen. Dabei ist auf der Oberseite eine Lauffläche 4 für Lasträder vorgesehen, die im Wesentlichen die Gewichtskraft des Schienenfahrzeugs einleiten in diese Lauffläche 4 auf der Oberseite. Die Kraft muss durch das Schienenprofil durchgeleitet werden bis zu dessen Aufhängung, wo dann die Kraft abgeleitet wird an die Aufhängung.

An den Seitenflächen der Wandung sind die Laufflächen 3 für Führungsräder des Schienenfahrzeugs vorgesehen. Somit ist das Fahrzeug entlang der Schiene seitlich führbar.

Die die Ausnehmungen 14 umfassende Wandung ist über die Schienenwand 15 mit einem weiteren Abschnitt des Profils verbunden, der wiederum eine im Querschnitt geschlossene Ausnehmung 2 aufweist, die als Hohlleiter verwendet wird. Außerdem ist eine zur Seite hin offene Ausnehmung 1 ausgeführt, die als Schlitzhohlleiter verwendbar ist. Somit ist in einstückiger Weise eine Schiene geschaffen, die nicht nur die Gewichtskraft des Fahrzeugs und die seitliche Führung des Fahrzeugs sondern auch die Durchleitung von Wellen ermöglicht. Dabei ist ein im Profil geschlossener Hohlraum als Hohlleiter 2 verwendet und ein im Profil seitlich offener Hohlraum verwendet, welcher als Schlitzhohlleiter 1 vorgesehen ist. Dabei führt das Fahrzeug eine Antenne zum Senden und Empfangen von elektromagnetischen Wellen am Schlitzbereich entlang, so dass ein Austausch von Daten während der Bewegung des Fahrzeugs ununterbrochen ermöglicht ist. Denn die in den Schlitzhohlleiter 1 eingekoppelten Wellen breiten sich zwar entlang der Schiene aus, jedoch tritt ein Anteil am Schlitz heraus und ist daher zum Empfangen von Daten verwendbar. Umgekehrt wird ein Teil der aus der Antenne austretenden elektromagnetischen Strahlung in den Schlitzhohlleiter 1 eingekoppelt und somit von diesem entlang der Schienenrichtung weiterleitbar. Die Koppelungseinrichtung zum Einkoppeln beziehungsweise zum Auskoppeln der elektromagnetischen Strahlung ist in den Figuren nicht gezeigt.

An der die Ausnehmungen 14 umgebenden Wandung und an dem über die Schienenwand 15 verbundenen Abschnitt sind jeweils Befestigungsmittel 10, insbesondere Aufhängemittel, vorgesehen. Somit ist die EHB-Schiene mittels der Befestigungsmittel 10 an einer Hallenwand oder an T-Trägern einer Anlage befestigbar, insbesondere lösbar verbindbar. Hierdurch ist ein schnelles und einfaches Austauschen ermöglicht. Dabei wird die gesamte Schiene ausgetauscht, also sowohl der mechanisch tragende und als elektromagnetisch durchleitender Hohlleiter fungierende Teil.

An einer Seitenfläche der Schienenwand 15 sind auch Aufnahmen 7 für Hutschienen, insbesondere Hutschienenbefestigungsmittel, angeordnet, so dass also eine Hutschiene befestigbar ist, die weitere Funktionalitäten ermöglicht.

Außerdem sind im Schienenprofil noch Ausnehmungen vorgesehen, die als
Kanal 8, insbesondere Druckluftkanal oder Hydraulikkanal, verwendbar sind. Somit ist in Schienenrichtung Druckluft oder Hydraulikdruck durchleitbar, so dass eine Entwärmung des Schienenprofils erreichbar ist. Da aus dem Primärleiter starke Wechselmagnetfelder austreten, werden Wirbelströme im Schienenprofil induziert, die zu einer Erwärmung desselben führen. Mittels der Ausführung des Schienenprofils aus Metall, insbesondere Aluminium, wird die Wärme besonders gut abgeführt an die Druckluft oder Hydraulikkanäle. Somit sind als Laufräder und/oder Führungsräder sogar Kunststoff-ummantelte Räder oder Kunststoffräder verwendbar, also ist an der Lauffläche eine Materialpaarung zwischen Metall der Schiene und Kunststoff einsetzbar. Dies führt zu einem besonders geräuscharmen Betrieb des Fahrzeugs.

Auch im unteren Abschnitt sind seitlich Laufflächen 3 für Seitenräder und an der Unterseite eine Lauffläche 5 für weitere Führungsräder vorgesehen.

An der Schienenwand 15 ist eine Befestigungsfläche 6 für Kennzeichnungsmittel oder Codierungen, insbesondere Barcode oder Gebermaske, vorgesehen. Somit ist mittels eines am Fahrzeug angeordneten Sensors die Codierung ablesbar und daraus eine Information für die jeweilige aktuelle Position des Fahrzeugs bestimmbar. Diese Bestimmung erfolgt mittels einer elektronischen Schaltung im Fahrzeug, die mit dem Sensor elektrisch verbunden ist und somit die von diesem detektierten Informationen verarbeitet.

Mittels der Bohrkerben 9 ist eine Bohrhilfe geschaffen, insbesondere schon beim Stranggießen. Somit sind Bohrungen in einfacher Weise einbringbar in die Schienenwand 15 und somit auch elektronische Module anschraubbar. Außerdem ist ein Primärleiterkabel hindurchführbar durch solch ein Bohrloch. Vorzugswiese wird dieser Primärleiter in ein Kunststoffprofil eingeklipst, welches am Hutschienenbefestigungssystem 7 formschlüssig und/oder kraftschlüssig verbunden ist, insbesondere eingeklipst.

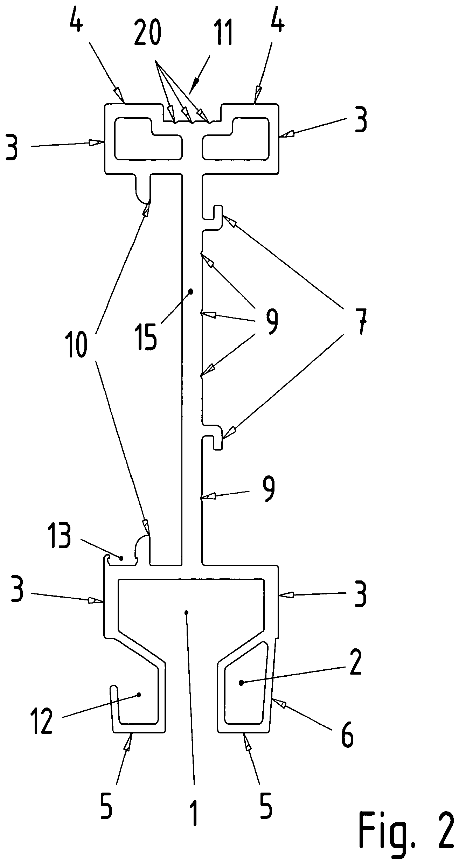

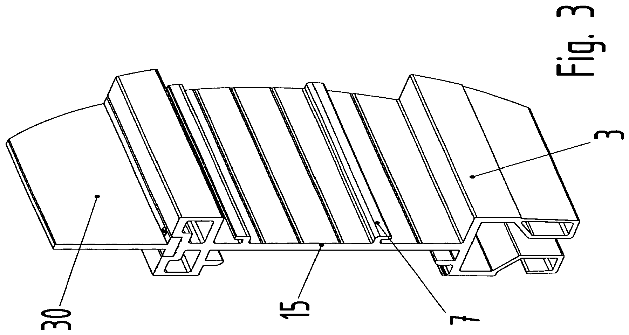

Wie in Figur 2 gezeigt, wird in bei der dortigen Ausführung in der Oberseite eine Adaptionsnut 11 für weitere Komponenten eingebracht. Wie in Figur 3 gezeigt, ist ein Schwert 30 vorsehbar, das entweder als stationäres Teil eines linearen Asynchronmotors aufgebaut ist, wobei dann das Fahrzeug einen Stator mit einer Drehstromwicklung aufweist, die mit dem Schwert als lineares Äquivalent zum Kurzschlusskäfig wechselwirkt zur Erzeugung von Vorschubkraft in Schienenrichtung. Alternativ weist das Fahrzeug einen Polradantrieb als Wirbelstromantrieb auf, bei dem eine Anordnung von Dauermagneten in Drehbewegung versetzbar ist von einem Elektromotor, so dass diese Dauermagnete am Schwert 30 vorbeidrehen und dabei Wirbelströme in diesem erzeugen, wodurch Vorschubkraft in Schienenrichtung erzeugbar ist.

Mit der in Figur 3 gezeigten Zahnstange 40 sind auch große Steigungen in der Anlage überwindbar, indem das Fahrzeug ein Zahnrad aufweist, dessen Zähne mit der Verzahnung der Zahnstange in Eingriff bringbar sind, so dass ein Durchdrehen von Antriebsrädern vermeidbar ist, insbesondere auch bei großen Steigungen, also hohen Hangabtriebskräften.

Wie aus Figur 3 ersichtlich ist das Schienenprofil derart gestaltet, dass ein integrierter Kabelkanal 12 geschaffen ist, so dass Kabel einlegbar sind und somit in Schienenrichtung in einfacher Weise verlegbar sind.

Außerdem ist eine Adaptionsnut 13 für einen aufsteckbaren Kabelkanal oder weitere Komponenten am Profil, insbesondere am unteren Abschnitt des Profils vorgesehen. Somit ist also eine Halterung einsteckbar, die beispielsweise einen Primärleiter aufnimmt und hält, der von einem Spulenkern einer am Fahrzeug angeordneten Sekundärwicklung zumindest teilweise umfassbar ist und somit an diese induktiv ankoppelbar.

Innerhalb der Anlage sind für jeden Streckenabschnitt Einspeisungen vorgesehen, Diese prägen einen mittelfrequenten Wechselstrom, insbesondere mit einer Frequenz zwischen 10 und 500 kHz, in einen langgestreckten Linienleiter ein, welcher in Schienenrichtung verlegt ist und der somit induktiv koppelbar ist an eine am Fahrzeug angeordnete Sekundärwicklung. Der Sekundärwicklung ist eine Kapazität derart in Reihe oder parallel zugeschaltet, dass die zugehörige Resonanzfrequenz im Wesentlichen der eingeprägten Wechselstromfrequenz entspricht, wodurch ein hoher Wirkungsgrad bei der berührungslosen Energieübertragung vom Primärleiter an die Sekundärwicklung des Fahrzeuges erreichbar ist.

Schlitzhohlleiter 1 und Hohlleiter 2 werden unterschiedlich verwendet. Wie oben geschildert, werden zwischen Fahrzeug und Schlitzhohlleiter Daten ausgetauscht, so dass diese dann im Schlitzhohlleiter weiterleitbar sind bis zu einer in den Schlitzhohlleiter hineinragenden Antenne.

Vorzugsweise wird diese Antenne im Bereich der Einspeisung des Primärstroms angeordnet. In diesem Bereich ist eine schlitz im Schienenteil eingefräst, in den eine Platte eingeschoben ist, so dass der Hohlleiter 2 in einen vorderen und hinteren Halbraum getrennt ist. Entsprechend wird vor und hinter der Platte jeweils eine Antenne vorgesehen zur Einkoppelung oder Auskoppelung von elektromagnetischen Wellen. Die Signale der Antennen werden einer jeweiligen Datenübertragungseinrichtung zugeführt, die jeweils im Beriech der Einspeisung angeordnet sind.

Der Schlitzhohlleiter 1 wird verwendet, um eine stabile geschirmte Funkverbindung für die bewegbaren spurgeführten Fahrzeuge zu realisieren. Dies bedeutet, dass die Anbindung eines Fahrzeuges an den Schlitzhohlleiter erfolgt über einen mobilen Fahrzeugkoppler, also eine entlang dem Schlitz des Schlitzhohlleiters geführte Antenne. Somit ist eine berührungslose mobile Datenübertragung ermöglicht.

Der geschlossene Hohlleiter 2 wird für die stationäre Backbone-Kommunikation verwendet. In diesem Fall sind sowohl Sender als auch Empfänger fest an einem Ort und können nicht bewegt werden. Zwischen der Sende- und der Empfangsposition ist der Hohlleiter geschlossen und es kann dazwischen keine Signalanbindung, also Signaleinkoppelung oder Signalauskoppelung, erfolgen. Auf diese Weise ist also eine stationäre Datenübertragung wie bei einer Kabelverbindung mit Koaxialkabel realisiert.

Wichtig ist dabei, dass jedem Streckenabschnitt ein elektrische Anordnung, die als Einspeisung bezeichenbar ist, zugeordnet ist, die nicht nur zur Leistungszufuhr in den Primärleiter zwecks berührungsloser Leistungsversorgung des Fahrzeugs vorgesehen ist, sondern auch Signale zwecks Datenübertragung ein- beziehungsweise ausgekoppelt werden. Dabei werden die Signale in den Hohlleiter 2 eingekoppelt und/oder in die als Hohlleiter verwendbaren Ausnehmungen 14. Auf diese Weise ist eine Datenübertragung zu allen Einspeisungen oder einer zentralen Steuerung ermöglicht, da alle Einspeisungen und gegebenenfalls auch die zentrale Steuerung zum Datenaustausch mit dem Hohlleiter 2 beziehungsweise den Ausnehmungen 14 eine entsprechend in den Hohlleiter beziehungswiese in die Ausnehmungen hineinragenden Antennen aufweisen.

Mittels des Schlitzhohlleiters sind Daten austauschbar zwischen dem Fahrzeug und derjenigen Einspeisung, welche im der Einspeisung zugeordneten Streckenabschnitt mit einer in den Schlitzhohlleiter 1 hineinragenden Antenne verbunden ist

Zwar werden die Signale in den Schlitzhohlleiter 1 und den Hohlleiter 2 beziehungsweise die Ausnehmungen 14 mit Frequenzen aus dem Frequenzbereich zwischen 4 und 8 GHz eingekoppelt, jedoch ist die Dämpfung in Schienenrichtung beim Schlitzhohlleiter 1 größer und daher eine geringere Datenübertragungsrate und/oder Reichweite realisierbar.

Im Hohlleiter 1 und/oder den Ausnehmungen 14 ist die Dämpfung geringer und daher die Datenübertragung mit einer hohen Rate ermöglicht.

Die Einspeisung umfasst auch einen Umsetzer, der diejenigen Daten, die nicht zwischen Fahrzeug und der mit dem Schlitzhohlleiter des Streckenabschnitts zugeordneten Einspeisung auszutauschen sind, weiterleitet in den Hohlleiter 2 oder diesem entnimmt

Wie in Figur 2 gezeigt, weist die Adaptionsnut 11 eine in der Nut mittig angeordnete Bohrkerbe und zwei weitere Bohrkerben 20 auf, so dass an zu beiden Seiten der mittig angeordneten Bohrkerbe jeweils zumindest eine Bohrkerbe 20 angeordnet ist, insbesondere sind diese Bohrkerben dann außermittig angeordnet. Dabei ist eine symmetrische Beabstandung zur mittig angeordneten Bohrkerbe 20 vorteilhaft.

Die Bohrkerben sind in Schienenrichtung ausgedehnt ausgeführt, insbesondere also vom Strangguss-Werkzeug beim Stranggießen eingebracht.

Auf diese Weise ist es einfach, eine Bohrung im Bereich der Bohrkerbe einzubringen, da das Bohrwerkzeug beim Ansetzen nicht seitlich abrutscht. Die Bohrung umfasst nach deren Herstellung die Bohrkerbe 20.

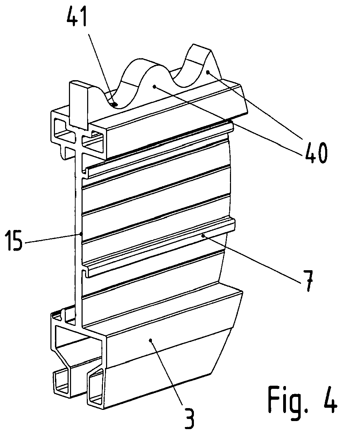

Bei der Herstellung wird wahlweise eine Ausführung nach Figur 3 beziehungsweise nach Figur 4 herstellbar. Hierzu werden die entsprechend vorteilig angeordneten Bohrungen in das Profilteil an den entsprechenden Bohrkerben eingebracht.

Bei Wahl der Ausführung nach Figur 3 werden zwei Bohrungen in den außermittigen Kerben 20 verwendet, so dass das Schwert 30 an seiner im Nutgrund angeordneten Verbreiterung zu beiden Seiten schraubverbunden ist mit dem Profilteil.

Bei Wahl der Ausführung nach Figur 4 wird eine Bohrung in den mittig angeordneten Kerbe 20 verwendet, so dass die Zahnstange 40 mittig schraubverbunden ist mit dem Profilteil, insbesondere wobei die Schraubverbindung in einer Vertiefung der Zahnstange 40 angeordnet ist, also an einer Stelle mit möglichst kleiner Wandstärke.

Somit ist also ein Bausatz bereit stellbar, der das Profilteil, die Zahnstange und das Schwert aufweist. Aus diesem Bausatz sind dann wahlweise eine Variante mit Schwert oder alternativ mit Zahnstange herstellbar. Daher sind mit einer geringen Teilezahl eine hohe Anzahl an Varianten herstellbar. Auf diese Weise ist somit eine Baureihe von verschiedenen Schienenprofilen aus dem Bausatz erzeugbar.

Vorzugsweise sind weitere Bohrkerben ebenfalls in Schienenrichtung parallel ausgeführt und in der Adaptionsnut vorgesehen, wodurch somit weitere Schraubverbindungen in anderen Abständen zur mittig angeordneten Bohrkerbe ermöglicht sind.

Bei weiteren erfindungsgemäßen Ausführungsbeispielen sind nicht nur Schwert oder Zahnstange sondern auch weitere Reaktivteile, wie ein Dauermagnete aufnehmendes Halteteil zur Bildung eines Synchronlinearmotors oder ein Reaktivteil eines linearen Reluktanzmotors aufgenommen.

Bei weiteren erfindungsgemäßen Ausführungsbeispielen ist statt der mittig angeordneten Bohrkerbe eine nicht mittig angeordnete Bohrkerbe verwendet.

### Bezugszeichenliste

1 Schlitzhohlleiter
2 Hohlleiter
3 Lauffläche für Seitenräder
4 Lauffläche für Lasträder
5 Lauffläche für weitere Führungsräder
6 Befestigungsfläche für Kennzeichnungsmittel oder Codierungen, insbesondere Barcode oder Gebermaske
7 Aufnahme für Hutschienen, insbesondere Hutschienenbefestigungsmittel
8 Kanal, insbesondere Druckluftkanal oder Hydraulikkanal
9 Bohrkerben
10 Befestigungsmittel, insbesondere Aufhängemittel
11 Adaptionsnut für weitere Komponenten
12 Integrierter Kabelkanal
13 Adaptionsnut für aufsteckbaren Kabelkanal oder weitere Komponenten
14 Ausnehmung, insbesondere verwendbar als Hohlleiter
15 Schienenwand
20 Bohrkerben
30 Schwert, insbesondere Aluminiumschwert
40 Zahnstange
41 Schraube, eingeschraubt im Bereich der mittleren Bohrkerbe

## Patentansprüche

1. Anordnung mit einem Schienenteil und einem auf dem Schienenteil bewegbaren Fahrzeug,
wobei das Schienenteil ein Schienenprofilteil aufweist,
wobei das Schienenprofilteil mehrere voneinander beabstandete Bohrhilfen (9, 20) aufweist,
wobei die Bohrhilfen (9, 20) am Schienenprofilteil als sich in Schienenrichtung erstreckende, zueinander parallel verlaufende Bohrkerben (9,20) ausgeführt sind, wobei das Schienenprofilteil samt den Bohrkerben (9, 20) als Stranggussteil gefertigt ist, **dadurch gekennzeichnet, dass** erste Bohrkerben (20) in einer Nut angeordnet sind, insbesondere an deren Nutgrund, wobei an einer der ersten Bohrkerben (20) eine Bohrung eingebracht ist, an der ein erstes Reaktivteil mit dem Schienenprofilteil schraubverbunden ist, wobei eine von dieser ersten Bohrkerbe (20) beabstandete weitere erste Bohrkerbe (20) ungenutzt ist, insbesondere zur Nutzung bei einer Schraubverbindung mit einem vom ersten Reaktivteil unterschiedlichen Reaktivteil.

2. Anordnung nach Anspruch 1,
**dadurch gekennzeichnet, dass**
das Schienenprofilteil aus Aluminium gefertigt ist.

3. Anordnung nach mindestens einem der vorangegangenen Ansprüche,
**dadurch gekennzeichnet, dass**
im Schienenprofilteil eine Ausnehmung (14) zur Durchleitung eines Kühlmediums, wie Luft, Druckluft, Wasser, Öl oder Hydrauliköl, angeordnet ist.

4. Anordnung nach mindestens einem der vorangegangenen Ansprüche,
**dadurch gekennzeichnet, dass** das Schienenprofilteil zumindest eine Lauffläche (3, 4, 5) für ein Rad des Fahrzeugs aufweist.

5. Anordnung nach mindestens einem der vorangegangenen Ansprüche,
**dadurch gekennzeichnet, dass** die ersten Bohrkerben ( 20) an der Oberseite und weitere Bohrkerben (9) an einer Seitenfläche angeordnet sind, so dass ein Primärleiter durch eine in die weitere Bohrkerbe (9) eingebrachte Bohrung hindurchführbar ist.

6. Anordnung nach mindestens einem der vorangegangenen Ansprüche,
**dadurch gekennzeichnet, dass**
das Schienenprofilteil eine als Hohlleiter verwendete Ausnehmung (14) und eine als Schlitzhohlleiter (1) verwendete Ausnehmung (14) aufweist, wobei
- eine Antenne zum Einkoppeln beziehungsweise Auskoppeln von elektromagnetischer Strahlung in den Hohlleiter,
- eine Antenne zum Einkoppeln beziehungsweise Auskoppeln von elektromagnetischer Strahlung in den Schlitzhohlleiter (1) und
- das Fahrzeug eine Antenne zum Einkoppeln beziehungsweise Auskoppeln von elektromagnetischer Strahlung in den Schlitzhohlleiter (1)
vorgesehen ist.

7. Anordnung nach mindestens einem der vorangegangenen Ansprüche,
**dadurch gekennzeichnet, dass**
die im Hohlleiter eingespeiste Frequenz der elektromagnetischen Wellen sich weniger als um den Faktor Zwei unterscheidet von der in den Schlitzhohlleiter (1) eingespeisten Frequenz elektromagnetischer Wellen.

8. Anordnung nach mindestens einem der vorangegangenen Ansprüche,
**dadurch gekennzeichnet, dass**
die Nut in einer Lauffläche (3, 4, 5) des Schienenprofilteils eingebracht ist.

9. Anordnung nach mindestens einem der vorangegangenen Ansprüche,
**dadurch gekennzeichnet, dass**
weitere als Hohlleiter verwendbare Ausnehmungen (14) im Schienenprofilteil angeordnet sind, wobei die Abmessungen derart klein sind, dass eine mindestens zweifach höhere Frequenz verwendet werden muss als bei dem Schlitzhohlleiter (1).

10. Anordnung nach mindestens einem der vorangegangenen Ansprüche,
**dadurch gekennzeichnet, dass**
am Schienenprofilteil Aufnahmemittel ausgeprägt sind, an denen ein einen Primärleiter aufnehmendes Haltemittel, insbesondere Kunststoffprofilteil, befestigbar ist, in welchen ein mittelfrequenter Wechselstrom einprägbar ist, insbesondere mit einer Frequenz zwischen 10 und 500 kHz, so dass eine am Fahrzeug angeordnete Sekundärwicklung induktiv gekoppelt ist an den Primärleiter, welcher in Schienenrichtung langgestreckt verlegt ist, und der Sekundärwicklung eine Kapazität derart in Reihe oder parallel zugeschaltet ist, dass die zugehörige Resonanzfrequenz im Wesentlichen der Frequenz des in den Primärleiter eingespeisten Wechselstroms entspricht.

## Claims

1. An arrangement with a rail part and a vehicle movable on the rail part,
wherein the rail part has a rail profile part,
wherein the rail profile part has a plurality of drilling aids (9, 20) spaced apart from each other,
wherein the drilling aids (9, 20) on the rail profile part are embodied as drilling notches (9, 20) extending in the rail direction and running parallel to each other,
wherein the rail profile part together with the drilling notches (9,20) is manufactured as a continuously-cast part,
**characterised in that**
first drilling notches (20) are arranged in a groove, in particular on the groove bottom thereof, with a bore being formed on one of the first drilling notches (20), on which bore a first reactive part is screw-connected to the rail profile part, with a further first drilling notch (20) spaced apart from this first drilling notch (20) being unused, in particular for use in a screw connection with a reactive part which is different from the first reactive part.

2. An arrangement according to Claim 1, **characterised in that** the rail profile part is manufactured from aluminium.

3. An arrangement according to at least one of the preceding claims, **characterised in that** a cutout (14) for passing through a cooling medium, such as air, compressed air, water, oil or hydraulic oil, is arranged in the rail profile part.

4. An arrangement according to at least one of the preceding claims, **characterised in that** the rail profile part has at least one running surface (3, 4, 5) for a wheel of the vehicle.

5. An arrangement according to at least one of the preceding claims, **characterised in that** the first drilling notches (20) are arranged on the upper side and further drilling notches (9) on a lateral face, so that a primary conductor can be passed through a bore formed in the further drilling notch (9).

6. An arrangement according to at least one of the preceding claims,
**characterised in that**
the rail profile part has a cutout (14) used as a hollow conductor and a cutout (14) used as a slotted hollow conductor (1), with
- an antenna for coupling-in or coupling-out electromagnetic radiation into the hollow conductor,
- an antenna for coupling-in or coupling-out electromagnetic radiation into the slotted hollow conductor (1), and
- the vehicle an antenna for coupling-in or coupling-out electromagnetic radiation into the slotted hollow conductor (1) [sic]
being provided.

7. An arrangement according to at least one of the preceding claims, **characterised in that** the frequency of the electromagnetic waves which is fed into the hollow conductor differs by less than a factor of two from the frequency of electromagnetic waves fed into the slotted hollow conductor (1).

8. An arrangement according to at least one of the preceding claims, **characterised in that** the groove is formed in a running surface (3, 4, 5) of the rail profile part.

9. An arrangement according to at least one of the preceding claims, **characterised in that** further cutouts (14) which are usable as hollow conductors arc arranged in the rail profile part, the dimensions being so small that a frequency which is at least twice as high has to be used than with the slotted hollow conductor (1).

10. An arrangement according to at least one of the preceding claims, **characterised in that** receiving means are formed on the rail profile part, on which means a holding means which receives a primary conductor, in particular a plastics-material profile part, can be fixed, into which a medium-frequency alternating current can be injected, in particular with a frequency between 10 and 500 kHz, so that a secondary winding arranged on the vehicle is inductively coupled to the primary conductor, which is laid in elongate manner in the rail direction, and a capacitor is connected in series or in parallel to the secondary winding such that the associated resonant frequency corresponds substantially to the frequency of the alternating current fed into the primary conductor.

## Revendications

1. Agencement comprenant une partie de rail et un véhicule pouvant être déplacé sur la partie de rail,
sachant que la partie de rail présente une partie profilée de rail,
sachant que la partie profilée de rail présente plusieurs guides de perçage (9, 20) distants les uns des autres,
sachant que les guides de perçage (9, 20) sont réalisés sur la partie profilée de rail sous la forme d'entailles de perçage (9, 20) s'étendant parallèlement entre elles dans la direction du rail,
sachant que la partie profilée de rail conjointement avec les entailles de perçage (9, 20) est fabriquée sous forme de pièce réalisée en coulée continue,
**caractérisé en ce que** des premières entailles de perçage (20) sont disposées dans une rainure, en particulier sur son fond de rainure, sachant qu'un perçage est pratiqué sur une des premières entailles de perçage (20), perçage où une première partie réactive est assemblée par vissage à la partie profilée de rail, sachant qu'une autre première entaille de perçage (20), distante de cette première entaille de perçage (20) et destinée notamment à être utilisée pour un assemblage par vissage avec une partie réactive différente de la première partie réactive, est inutilisée.

2. Agencement selon la revendication 1, **caractérisé en ce que** la partie profilée de rail est fabriquée en aluminium.

3. Agencement selon au moins une des revendications précédentes, **caractérisé en ce qu'**un évidement (14) est disposé dans la partie profilée de rail pour le passage d'un fluide de refroidissement tel que de l'air, de l'air comprimé, de l'eau, de l'huile ou du liquide hydraulique.

4. Agencement selon au moins une des revendications précédentes, **caractérisé en ce que** la partie profilée de rail présente au moins une surface de roulement (3, 4, 5) pour une roue du véhicule.

5. Agencement selon au moins une des revendications précédentes, **caractérisé en ce que** les premières entailles de perçage (20) sont disposées sur le côté supérieur et d'autres entailles de perçage (9) sont disposées sur une face latérale, de sorte qu'on peut faire passer un conducteur primaire par un perçage pratiqué dans l'autre entaille de perçage (9).

6. Agencement selon au moins une des revendications précédentes, **caractérisé en ce que** la partie profilée de rail présente un évidement (14) utilisé comme guide d'ondes et un évidement (14) utilisé comme guide d'ondes (1) à fente longitudinale, sachant
- qu'il est prévu une antenne pour injecter un rayonnement électromagnétique dans le guide d'ondes ou l'en extraire,
- qu'il est prévu une antenne pour injecter un rayonnement électromagnétique dans le guide d'ondes (1) à fente longitudinale ou l'en extraire,
- et que le véhicule présente une antenne pour injecter un rayonnement électromagnétique dans le guide d'ondes (1) à fente longitudinale ou l'en extraire.

7. Agencement selon au moins une des revendications précédentes, **caractérisé en ce que** la fréquence des ondes électromagnétiques qui est injectée dans le guide d'ondes se différencie de moins du facteur deux de la fréquence des ondes électromagnétiques qui est injectée dans le guide d'ondes (1) à fente longitudinale.

8. Agencement selon au moins une des revendications précédentes, **caractérisé en ce que** la rainure est pratiquée dans une surface de roulement (3, 4, 5) de la partie profilée de rail.

9. Agencement selon au moins une des revendications précédentes, **caractérisé en ce que** d'autres évidements (14) utilisables comme guides d'ondes sont disposés dans la partie profilée de rail, sachant que les dimensions sont tellement petites qu'on doit utiliser une fréquence au moins deux fois plus grande que pour le guide d'ondes (1) à fente longitudinale.

10. Agencement selon au moins une des revendications précédentes, **caractérisé en ce que** des moyens récepteurs sont formés en saillie sur la partie profilée de rail, moyens sur lesquels peut être fixé un moyen de maintien recevant un conducteur primaire, en particulier une pièce profilée en matière plastique, dans laquelle peut être injecté un courant alternatif à moyenne fréquence, en particulier avec une fréquence comprise entre 10 et 500 kHz, de sorte qu'un bobinage secondaire disposé sur le véhicule est couplé par induction au conducteur primaire qui est posé en s'étendant longitudinalement dans la direction du rail, et un condensateur est mis en circuit en série ou en parallèle avec le bobinage secondaire de telle sorte que la fréquence de résonance associée correspond pour l'essentiel à la fréquence du courant alternatif injecté dans le conducteur primaire.
